# EUROPÄISCHE PATENTSCHRIFT

(11) **EP 3 041 358 B1**
(45) Veröffentlichungstag und Bekanntmachung des Hinweises auf die Patenterteilung: **25.10.2017**
(21) Anmeldenummer: 14756037.9
(22) Anmeldetag: 26.08.2014
(51) Int. Cl.: A21B 1/48, A21B 5/02

(54) **BACKVORRICHTUNG**
BAKING APPARATUS
DISPOSITIF DE CUISSON

(30) Priorität: 03.09.2013 AT 6842013
(43) Veröffentlichungstag der Anmeldung: 13.07.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); DOLEZEL, Ralf, A-1220 Wien (AT)
(74) Vertreter: Puchberger & Partner Patentanwälte
(86) Internationale Anmeldenummer: PCT/EP2014/068030
(87) Internationale Veröffentlichungsnummer: WO 2015/032649

(56) Entgegenhaltungen:
- WO-A1-00/65918
- WO-A1-97/34492

## Beschreibung

Die Erfindung betrifft eine Backvorrichtung zum Herstellen endloser Bänder aus vorzugsweise flüssigen Backmassen auf einem in einem Maschinengestell umlaufenden, zumindest abschnittsweise beheizten Backflächenträger, der zumindest eine endlose Backfläche durch zumindest eine im Maschinengestell stationär angeordnete, eine Heizvorrichtung enthaltende, von einer Backmassenauftragsvorrichtung bis zu einer Bandabnahmevorrichtung reichende Backzone transportiert, wobei eine drehbar gelagerte und angetriebene nabenlose Trommel als umlaufender beheizter Backflächenträger vorgesehen ist. Eine derartige Backvorrichtung ist aus der WO97/34492 A1 bekannt. Insbesondere betrifft die Erfindung eine Backvorrichtung, umfassend eine drehbar gelagerte und angetriebene Trommel, die in einem Maschinengestell geführt ist. Ähnliche Vorrichtungen sind bekannt und in unterschiedlichen Ausführungsformen publiziert.

Beispielsweise sind Backmaschinen zur Herstellung gerollter Backprodukte wie Waffeln oder Hohlhippen bekannt, bei denen eine Trommel um eine zentrale Achse gedreht wird. Dabei ist die Trommel im Bereich der Achse mit einer Los-Festlageranordnung derart gelagert, dass eine seitliche Bewegung verhindert ist. Der Backflächenträger selbst ist radförmig oder zylinderförmig ausgeführt und weist Verbindungselemente auf, die von seinem Außenbereich bis zur Radnabe reichen. Diese Verbindung der äußeren Backfläche und der Radnabe hat den Nachteil, dass im Inneren des Backflächenträgers keine weiteren Elemente wie beispielsweise Heizelemente oder Backmassenauftragsvorrichtungen vorgesehen sein können.

Aus diesem Grund wurden derartige Backmaschinen weiterentwickelt, wobei als Backflächenträger ein hohlzylinderförmiger Ring vorgesehen ist. Diese nabenlose Anordnung weist meist eine Antriebsrolle im unteren Bereich auf, auf welcher der Backring aufliegt. Die Backringe haben beispielsweise einen Durchmesser von etwa einem bis 2,5 Meter und eine Breite von etwa 20cm bis 60cm.

Bei der Fertigung der Backringe sind eine exakte Planparallelität der seitlichen Stirnseiten sowie eine exakte Koaxialität der Rundflächen wirtschaftlich nicht fertigbar. Aufgrund der daraus resultierenden Fertigungstoleranzen neigen Backringe bei endloser Drehung dazu, eine seitliche Bewegung auszuführen. Um diese seitliche Bewegung des Backrings zu verhindern, werden gemäß Stand der Technik Führungsrollen mit Führungskränzen verwendet, deren Drehachsen im Wesentlichen parallel zur Drehachse des Backrings verlaufen. Nachteilig an dieser Konstruktion ist, dass es zwischen den Kränzen und dem Backring zu starkem Verschleiß kommt. Durch die relativ großen Abmaße und die langen Standzeiten kommt es bei dieser Zwangsführung zu Ausbrechen der Kanten des Backrings oder zum Bruch der Führungskränze der Führungsrollen.

Aufgabe der Erfindung ist es eine Backvorrichtung oben genannter Art zu schaffen, bei der die nabenlose Trommel geführt ist, wobei die Führung einfach, verschleißarm, wartungsarm und zuverlässig ausgeführt ist.

Insbesondere ist es eine Aufgabe der Erfindung, eine Antriebs- und Führungsvorrichtung für eine oben genannte Backmaschine zu schaffen, die einfach und effektiv im Aufbau ist, wobei dadurch die Wartungskosten und die Effizienz der Backmaschine verbessert ist.

Die erfindungsgemäßen Aufgaben werden insbesondere durch die Merkmale der unabhängigen Patentansprüche gelöst.

Weitere vorteilhafte Merkmale der Backvorrichtung zum Herstellen endloser Bänder aus vorzugsweise flüssigen Backmassen auf einem in einem Maschinengestell umlaufenden, zumindest abschnittsweise beheizten Backflächenträger, der zumindest eine endlose Backfläche durch zumindest eine im Maschinengestell stationär angeordnete, eine Heizvorrichtung enthaltende, von einer Backmassenauftragsvorrichtung bis zu einer Bandabnahmevorrichtung reichende Backzone transportiert, wobei eine drehbar gelagerte und angetriebene nabenlose Trommel als umlaufender beheizter Backflächenträger vorgesehen ist,
sind, dass eine um eine Lenkachse schwenkbar angeordnete Nachlaufrolle vorgesehen ist, die in einem Kontaktbereich an einer Abrollfläche der Trommel abrollt, wobei zwischen dem Schnittpunkt der Lenkachse mit der Abrollfläche und dem Kontaktbereich ein Nachlaufabstand vorgesehen ist, dass die Abrollfläche eine Mantelfläche der Trommel ist, dass die Abrollfläche eine innere Mantelfläche der Trommel ist, dass die Nachlaufrolle drehbar um eine Radachse an einem Nachlauflenker gelagert ist und/oder dass der Nachlauflenker drehbar um die Lenkachse am Maschinengestell gelagert ist.

In vorteilhafter Weise kann die Erfindung, dadurch gekennzeichnet sein, dass die Lenkachse im Wesentlichen orthogonal zur Radachse verläuft, dass die Trommel gegen die Schwerkraft an der Nachlaufrolle abgestützt ist, dass die Trommel hängend an einer Antriebsrolle zum Drehantrieb der Trommel angeordnet ist, dass die Trommel hohlzylinderförmig ausgeführt ist und eine innere Mantelfläche und eine äußere Mantelfläche umfasst, dass die Antriebsrolle und die Nachlaufrolle an der inneren Mantelfläche abrollen, dass eine Backfläche an der äußeren Mantelfläche vorgesehen ist und/oder dass bei Verschwenkung des Nachlauflenkers aus der neutralen Position, insbesondere durch die Drehung der Trommel ein Rückstellmoment Richtung neutrale Position erzeugt ist, wobei in der neutralen Position die Lenkachse und der Schwerpunkt des momentanen Berührbereichs der Nachlaufrolle mit der Abrollfläche in einer Ebene liegen, wobei die Ebene eine Normalebene der Drehachse der Trommel ist oder die Drehachse der Nachlaufrolle und die Drehachse der Antriebsrolle parallel verlaufen, dass beidseitig der Trommel jeweils zumindest eine Führungsrolle vorgesehen ist, dass die Führungsrollen die Trommel an deren Stirnseiten berühren oder im Bereich der Stirnseiten angeordnet sind, dass die Führungsrollen in einem Winkelbereich von 90° vor und/oder nach der Antriebsrolle vorgesehen sind und bevorzugt im oberen Drittel der an der Antriebsrolle hängenden Trommel vorgesehen sind, dass die Antriebsrolle außerhalb des oberen Wendepunkts an der Trommel anliegt und bevorzugt in einem Winkelbereich von 1° bis 30° vor oder nach dem oberen Wendepunkt der Trommel vorgesehen ist, dass die Trommel geometrisch eine erste Hälfte und eine zweite Hälfte umfasst, wobei die beiden Hälften durch eine vertikal verlaufende, die Drehachse der Trommel umfassende Ebene voneinander getrennt sind und/oder dass die Antriebsrolle die Trommel in der ersten Hälfte und die Nachlaufrolle die Trommel in der zweiten Hälfte außerhalb der Ebene berühren.

Die Vorrichtung umfasst ein Maschinengestell, an welchem ein Backflächenträger vorgesehen ist. Dieser ist bevorzugt als hohlzylinderförmiger Körper ausgeführt, der durch eine stationär angeordnete Heizvorrichtung erwärmbar oder erwärmt ist, sodass zwischen einer Backmassenauftragsvorrichtung und einer Bandabnahmevorrichtung eine Backzone gebildet ist.

Bevorzugt ist der Backflächenträger hängend an einer Antriebsrolle angeordnet und durch die Antriebsrolle rotatorisch angetrieben.

In bevorzugter Weise ist die Antriebsrolle im oberen Bereich des Backflächenträgers vorgesehen. Der Backflächenträger, der insbesondere ringförmig ausgeführt ist, weist einen oberen Totpunkt auf. Der obere Totpunkt entspricht jenem Punkt des zylindrischen Körpers, der dem höchsten Punkt der aufrecht stehenden Trommel entspricht. Gemäß einer Ausführungsform der Erfindung ist die Antriebsrolle in einem Bereich außerhalb dieses oberen Totpunkts angeordnet. Insbesondere berührt die Antriebsrolle den Backflächenträger in einem Winkelbereich von etwa 1° bis 90° vor oder nach dem oberen Totpunkt.

Um den Backflächenträger gegen die Schwerkraft in dieser Position zu halten, ist die erfindungsgemäße Nachlaufrolle vorgesehen. Diese ist mit dem Maschinengestell gekoppelt und an den Backflächenträger angelegt. Dadurch ist der Backflächenträger gegen die Schwerkraft an der Nachlaufrolle abgestützt.

Die Nachlaufrolle ist drehbar um eine Radachse gelagert und rollt an einer Abrollfläche des Backflächenträgers ab. Insbesondere ist die Nachlaufrolle an einem Nachlauflenker drehbar gelagert. Der Nachlauflenker ist bevorzugt drehbar um eine Lenkachse gelagert, wobei bevorzugt die Lenkachse und die Radachse einen Normalabstand ungleich null zueinander aufweisen. Die Lenkachse liegt bevorzugt in einer Normalebene der Drehachse der Trommel.

Die Nachlaufrolle berührt die Abrollfläche des Backflächenträgers in einem Kontaktbereich. Dieser Kontaktbereich ist jener Bereich, in dem ein Kontakt zwischen dem Backflächenträger und der Nachlaufrolle im Rahmen der Kinematik möglich ist. Durch ein Verschwenken der Nachlaufrolle entspricht der Kontaktbereich im Wesentlichen einem dreidimensional gekrümmten bogenförmigen Abschnitt. Die Nachlaufrolle hat eine stabile Lage in einem Mittelbereich, also in der neutralen Position. In der neutralen Position liegen z.B. die Lenkachse und der Schwerpunkt des momentanen Berührbereichs der Nachlaufrolle mit der Abrollfläche in einer Ebene, wobei die Ebene eine Normalebene der Drehachse der Trommel ist.

Die Schnittachse der Lenkachse mit der Abrollfläche und der Kontaktbereich weisen einen gewissen Nachlaufabstand auf. Dadurch ist die Nachlaufrolle durch die Drehung des Backflächenträgers in die neutrale Position gedrückt. Insbesondere ist durch die Drehung des Backflächenträgers ein Rückstellmoment in die neutrale Position bewirkt. Dadurch ist eine Führung des Backflächenträgers bzw. der Trommel durch Selbstzentrierung bewirkt.

Bevorzugt ist die Lenkachse im Wesentlichen orthogonal zur Drehachse der Nachlaufrolle angeordnet. Dies bedeutet, dass die beiden Drehachsen zueinander normal stehen. Dies bedeutet jedoch nicht zwangsläufig, dass die beiden Achsen einen Schnittpunkt miteinander aufweisen. Bevorzugt besteht kein Schnittpunkt.

Als Abrollfläche wird jene Fläche des Backflächenträgers bezeichnet, an welcher die Nachlaufrolle abrollt. Dies kann eine Fläche, beispielsweise eine zylindrische Fläche sein. Jedoch können auch abschnittsweise segmentierte, gerippte oder ähnliche Flächen als Abrollflächen vorgesehen sein.

Als Winkelbereich ist ein Bereich von Winkeln definiert, die vom Zentrum des Backflächenträgers in oder gegen die Rotation des Backflächenträgers gemessen werden.

Ferner sind können zur seitlichen Führung der Trommel Führungsrollen vorgesehen sein. Diese sind insbesondere im Bereich der Antriebsrolle angeordnet und führen die Trommel im oberen Bereich. Bevorzugt sind die Führungsrollen derart angeordnet, dass sie zur Führung seitlich an der Stirnseite der Trommel abrollen. Sie sind dazu eingerichtet, eine stützende Korrektur des leichten, durch Fertigungstoleranzen hervorgerufenen seitlichen Verlaufens des Rings auszuführen.

Die exakte Seitenführung wird durch die Nachlaufrolle ermöglicht.

In weiterer Folge wird die Erfindung anhand konkreter Ausführungsbeispiele weiter beschrieben.
Fig. 1 zeigt eine Ansicht der Backvorrichtung von oben.
Fig. 2 zeigt eine Schrägansicht der erfindungsgemäßen Backvorrichtung.
Fig. 3 zeigt einen Schnitt der erfindungsgemäßen Backvorrichtung, wobei die Drehachse des Backflächenträgers im Wesentlichen projizierend verläuft.
Fig. 4 zeigt ein Detail der Nachlaufrolle und des Nachlauflenkers in einer schematisierten Schnittdarstellung.

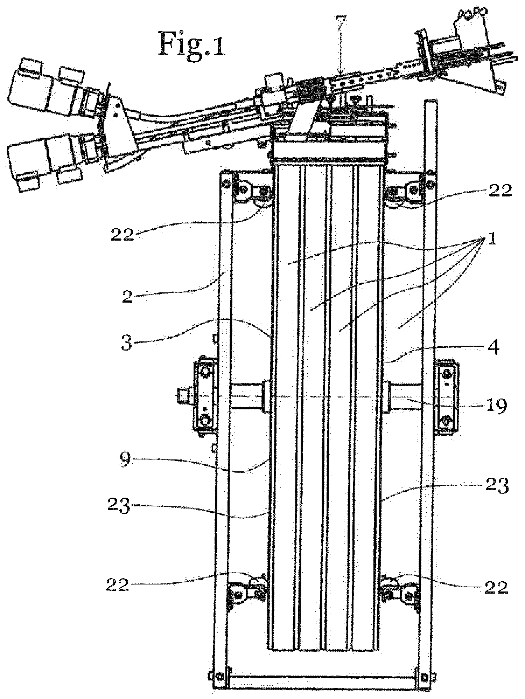

Fig. 1 zeigt eine erfindungsgemäße Backvorrichtung von oben. Anzumerken ist, dass diese Darstellung eine schematische Darstellung ist. Die Vorrichtung umfasst ein Maschinengestell 2, einen Backflächenträger 3 mit einer Backfläche 4, auf der vier Bänder 1 gebacken werden. Der Backflächenträger 3 ist im Wesentlichen zylindrisch ausgestaltet, wobei die Drehachse dieses Zylinders in der Darstellung der Fig. 1 im Wesentlichen in der Bildebene verläuft. Die Backmassenauftragsvorrichtung 6 sowie die Heizvorrichtung 5 sind in der vorliegenden schematischen Darstellung nicht eingezeichnet. Die Bandabnahmevorrichtung 7 ist dazu eingerichtet, die Bänder von dem Backflächenträger 3 bzw. der Backfläche 4 abzunehmen und weiter zu bearbeiten. Insbesondere kann eine Aufwicklung der Teigbänder 1 zu langgestreckten Röhren erfolgen.

Der Backflächenträger 3 ist in der vorliegenden Ausführungsform als Trommel 9 und insbesondere als nabenlose Trommel ausgeführt.

Die Trommel 9 bzw. der Backflächenträger 3 sind drehbar angeordnet und angetrieben. Der Antrieb erfolgt in der vorliegenden Ausführungsform über die Antriebsrolle 19, die die Trommel 9 berührt. Die Antriebsrolle 19 ist von einem nicht dargestellten Drehantrieb angetrieben. Ferner sind seitlich an der Stirnseite 23 der Trommel 9 Führungsrollen 22 vorgesehen. Die Führungsrollen 22 sind mit dem Maschinengestell 2 verbunden und drehbar gelagert. Zwischen den jeweils paarweise angeordneten Rollen 22 besteht ein Freiraum, der im Wesentlichen der Breite des Backflächenträgers oder der Trommel 9 entspricht. Gegebenenfalls weist die so hergestellte seitliche Führung der Trommel 9 ein gewisses Übermaß auf, sodass die Druckkräfte und der Verschleiß zwischen der Stirnseite 23 der Trommel 9 und den Führungsrollen 22 klein gehalten sind. Gegebenenfalls können die Führungsrollen 22 auch gefedert gelagert sein. Die Drehachsen der Führungsrollen stehen im Wesentlichen normal auf die lokale Krümmung der Trommel im Berührberich. Beispielsweise sind die Drehachsen der Führungsrollen 22 in radialer Richtung zur Drehachse der Trommel 9 angeordnet. Die Führungsrollen 22 rollen an den Stirnseiten 23 der Trommel 9 ab.

Die Bandabnahmevorrichtung entspricht einer herkömmlichen Bandabnahmevorrichtung.

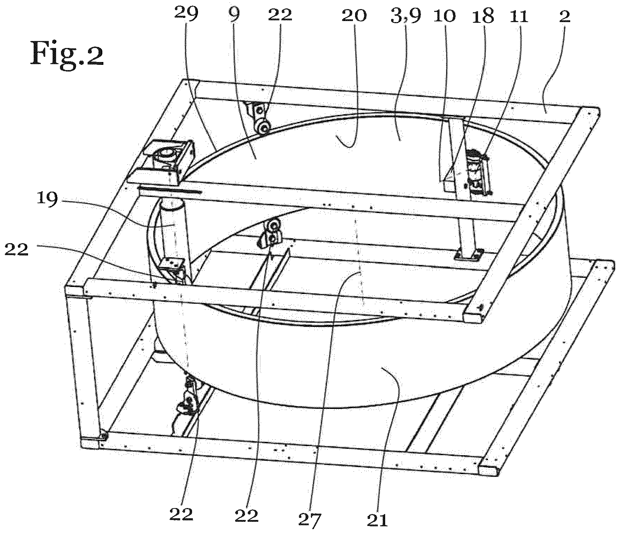

Fig. 2 zeigt eine schematische Schrägansicht der erfindungsgemäßen Vorrichtung. Die Ansicht entspricht im Wesentlichen einer Ansicht von schräg unten. Die Vorrichtung umfasst ein Maschinengestell 2, einen Backflächenträger 3, der bevorzugt als Trommel 9 ausgeführt ist. Insbesondere ist die Trommel 9 nabenlos und/oder ringförmig ausgeführt. In der vorliegenden Ausführungsform entspricht die Form der Trommel 9 im Wesentlichen einem Hohlzylinder. Dieser hat eine zylindrische Außenfläche und eine zylindrische Innenfläche. Erfindungsgemäß sind eine innere Mantelfläche 20 sowie eine äußere Mantelfläche 21 vorgesehen. Drehbar und antreibbar ist die Antriebsrolle 19 mit dem Maschinengestell 2 gekoppelt. Die Antriebsrolle 19 ist über einen Drehantrieb antreibbar. Hängend an der Antriebsrolle 19 ist die Trommel 9 vorgesehen. Die Antriebsrolle 19 berührt die Trommel 9 an der inneren Mantelfläche 20. Ferner sind an den Stirnseiten 23 der Trommel 9 anliegend Führungsrollen 22 vorgesehen. In der schematischen Darstellung der Fig. 2 sind seitliche Stützelemente des Maschinengestells 2 ausgeblendet, sodass die Vorrichtung übersichtlicher dargestellt ist. Insbesondere sind auch die Komponenten Backbandabnahmevorrichtung 7, Backmassenauftragsvorrichtung 6 sowie Heizvorrichtung 5 ausgeblendet.

Ferner ist eine Nachlaufrolle 11 vorgesehen. Diese Nachlaufrolle 11 rollt an der Trommel 9 ab, um insbesondere eine Stützung der Trommel zu bewirken. Dazu ist die Nachlaufrolle 11 an einem Nachlauflenker 18 vorgesehen. Der Nachlauflenker 18 und/oder die Nachlaufrolle 11 sind beweglich mit dem Maschinengestell 2 gekoppelt. Die Trommel weist eine Drehachse 27 auf, die bevorzugt ortsfest angeordnet ist. Jedoch ist der Bereich der Drehachse 27 im Wesentlichen frei von körperlichen Gegenständen. Wie obenstehend ausgeführt, handelt es sich bevorzugt um eine nabenlose Trommel 9.

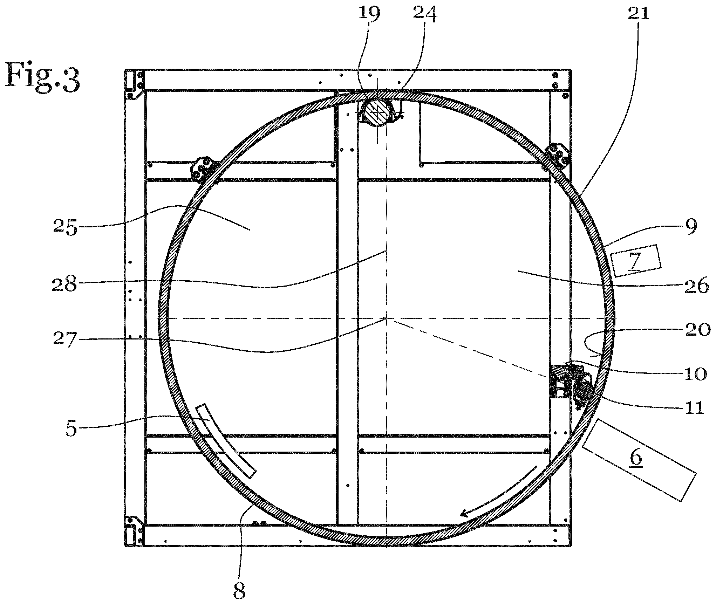

Fig. 3 zeigt eine schematische Schnittdarstellung der erfindungsgemäßen Vorrichtung.

Schematisch sind die Komponenten Backmassenauftragsvorrichtung 6 sowie Bandabnahmevorrichtung 7 eingezeichnet. Die Backmassenauftragsvorrichtung 6 entspricht einer herkömmlichen Backmassenauftragsvorrichtung für Ringbackmaschinen. Diese ist dazu geeignet und/oder eingerichtet, die Backmasse bandförmig auf den beheizten Backflächenträger 3 bzw. auf die endlose Backfläche 4 aufzutragen. Die Drehrichtung des Backflächenträgers 3 bzw. der Trommel 9 verläuft in der Darstellung der Fig. 3 im Uhrzeigersinn. Dies bedeutet, dass in der vorliegenden Konfiguration die Backzone 8 einen Großteil des Umfangs der Trommel einnimmt. Sie reicht insbesondere entlang der Drehrichtung der Trommel 9 von der Backmassenauftragsvorrichtung 6 bis zur Bandabnahmevorrichtung 7. Auch die Bandabnahmevorrichtung 7 ist in der vorliegenden Darstellung schematisch dargestellt und entspricht einer herkömmlichen Bandabnahmevorrichtung für Ringbackmaschinen

Fig.3 stellt eine Möglichkeit der Positionierung der Backmassenauftragsvorrichtung 6 sowie der Bandabnahmevorrichtung 7 dar. Diese Komponenten können jedoch bei allen Ausführungsformen der Erfindung an anderen Positionen vorgesehen sein. Beispielsweise kann eine Backzone 8 an der Innenseite der Trommel vorgesehen sein. Dabei ist zu beachten, dass die Backzone nicht überschneidend mit jenen Komponenten angeordnet ist, die die Trommel an ihrer Innenseite berühren. Jedoch bietet die vorliegende Konfiguration zwischen den Komponenten Antriebsrolle 19 und Nachlaufrolle 11 ausreichend Platz, um an der Innenseite der Trommel eine Backzone zu bilden.

Ferner können gemäß einer weiteren alternativen Ausführungsform mehrere Backmassenauftragsvorrichtungen 6 nebeneinander vorgesehen sein, sodass auf einer Trommel 9 mehrere Bänder nebeneinander gebacken und durch eine oder mehrere Bandabnahmevorrichtung 7 abgenommen werden können.

Ferner ist in Fig. 3 schematisch die Heizvorrichtung 5 eingezeichnet. Auch diese entspricht im Wesentlichen einer herkömmlichen Heizvorrichtung für Ringbackmaschinen. Diese kann beispielsweise als Gasheizvorrichtung oder Induktionsheizvorrichtung ausgeführt sein. Insbesondere kann die Heizvorrichtung 5 an der Innenseite der Trommel, an der Außenseite der Trommel und/oder seitlich vorgesehen sein sowie sich über einen kleinen Teil sowie einen Großteil des Umfangs der Trommel erstrecken. Bevorzugt ist die Heizvorrichtung 5 entlang der Backzone 8 vorgesehen.

Die Trommel 9 ist hängend an der Antriebsrolle 19 vorgesehen. Zur Übertragung der Drehung berührt die Antriebsrolle 19 die Trommel 9. Der Berührbereich zwischen der Antriebsrolle 19 und der Trommel 9 ist bevorzugt außerhalb des oberen Wendepunktes 24 angeordnet. Dieser Wendepunkt 24 entspricht im Wesentlichen jenem Bereich der Trommel, in dem eine horizontal verlaufende, die Drehachse 27 des Backflächenträgers enthaltende Ebene 28 die Trommel 9 schneidet. Es handelt sich somit um den höchsten Punkt der Abrollfläche der Trommel 9. Die horizontale Ebene 28 teilt die Trommel 9 im Wesentlichen in zwei Hälften. Die erste Hälfte 25 ist in der vorliegenden Darstellung links der Ebene 28 angeordnet. Die zweite Hälfte 26 ist in der vorliegenden Darstellung rechts der Ebene 28 angeordnet. Die Antriebsrolle 19 berührt die Trommel 9 in der vorliegenden Ausführung in der ersten Hälfte 25. Ferner ist eine Nachlaufrolle 11 vorgesehen. Diese Nachlaufrolle 11 berührt die Trommel in der zweiten Hälfte 26. Wie angeführt verläuft die horizontale Ebene 28 im Wesentlichen durch die Drehachse 27 der Trommel 9, die in der vorliegenden Darstellung im Wesentlichen projizierend verläuft.

Durch die außermittige Anordnung der Antriebsrolle 19 ist die Trommel 9 einerseits an der Antriebsrolle 19 und andererseits an der Nachlaufrolle 11 gegen die Schwerkraft abgestützt. Durch den außermittigen Versatz wird eine Kraft bewirkt, die die Trommel 9 selbsttätig durch Einfluss der Schwerkraft an die Nachlaufrolle 11 drückt. Durch die spezielle Ausgestaltung der Kinematik der Nachlaufrolle 11 ist eine selbsttätige Zentrierung der Trommel 9 bzw. des Backflächenträgers 3 bewirkt.

In der vorliegenden Ausführungsform rollen die Antriebsrolle 19 sowie die Nachlaufrolle 11 an der inneren Mantelfläche 20 der Trommel 9 ab.

Gegebenenfalls können die beiden Komponenten Nachlaufrolle 11 und Antriebsrolle 19 an unterschiedlichen Flächen der Trommel 9 abrollen. Beispielsweise können die Antriebsrolle und/oder die Nachlaufrolle auf der Außenseite bzw. auf der äußeren Mantelfläche 21 abrollen.

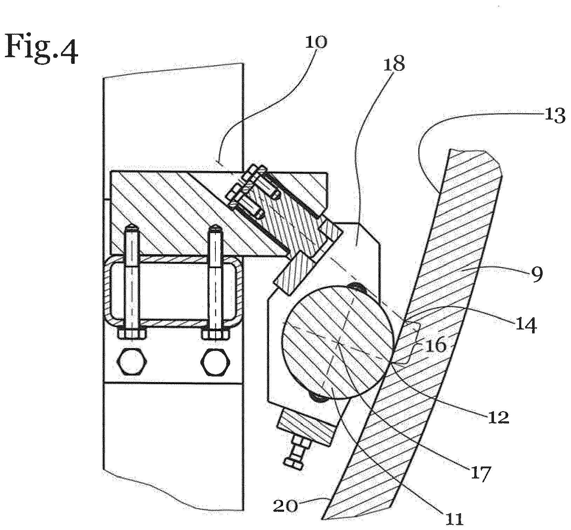

Fig. 4 zeigt ein Detail der Schnittdarstellung der Fig. 3, wobei insbesondere der Bereich der Nachlaufrolle 11 dargestellt ist. Die Nachlaufrolle 11 rollt an der Trommel 9 ab.

Insbesondere berührt die Nachlaufrolle 11 die Trommel 9 und insbesondere die innere Mantelfläche 20 der Trommel 9 in einem Kontaktbereich 12. Der Kontaktbereich 12 ist jener Bereich, in dem die Nachlaufrolle 11 die Trommel 9 berührt. Durch die Verschwenkbarkeit der Nachlaufrolle 11 hat dieser Kontaktbereich 12 beispielsweise einen bogenförmigen Verlauf. Die Nachlaufrolle 11 ist drehbar um eine Radachse 17, die in der vorliegenden Darstellung im Wesentlichen projizierend verläuft, an dem Nachlauflenker 18 angeordnet. Der Nachlauflenker 18 ist ebenfalls drehbar oder veschwenkbar angeordnet. Insbesondere ist der Nachlauflenker 18 um die Lenkachse 10 drehbar angeordnet. Die Abrollfläche 13, an welcher die Nachlaufrolle 11 abrollt und auf welcher der Kontaktbereich 12 vorgesehen ist, weist einen Abstand zum Schnittpunkt der Lenkachse 10 mit der Abrollfläche 13 auf. Dieser Abstand wird als Nachlaufabstand 16 bezeichnet. Durch Drehung der Trommel 9 ist die Nachlaufrolle in eine neutrale Position bewegt. Diese neutrale Position entspricht einer stabilen Lage des Nachlauflenkers 18 bzw. der Nachlaufrolle 11. Bei seitlicher Bewegung der Trommel 9 wird auch die Nachlaufrolle 11 mitbewegt, wodurch der Nachlauflenker 18 um die Lenkachse 10 verdreht wird. Die Parallelität der beiden Achsen - Antriebsrolle und Nachlaufrolle - ist wieder hergestellt. Dadurch sind Verspannungen und hohe Seitenverlaufskräfte, die zu Verschleiß führen würden, verhindert.

### Bezugszeichenliste

- 1: Band
- 2: Maschinengestell
- 3: Backflächenträger
- 4: Backfläche
- 5: Heizvorrichtung
- 6: Backmassenauftragsvorrichtung
- 7: Bandabnahmevorrichtung
- 8: Backzone
- 9: Trommel
- 10: Lenkachse
- 11: Nachlaufrolle
- 12: Kontaktbereich
- 13: Abrollfläche
- 14: Schnittpunkt
- 15: -
- 16: Nachlaufabstand
- 17: Radachse
- 18: Nachlauflenker
- 19: Antriebsrolle
- 20: Innere Mantelfläche
- 21: Äußere Mantelfläche
- 22: Führungsrolle
- 23: Stirnseite
- 24: Wendepunkt
- 25: Erste Hälfte
- 26: Zweite Hälfte
- 27: Drehachse der Trommel
- 28: Ebene

## Patentansprüche

1. Backvorrichtung zum Herstellen endloser Bänder (1) aus vorzugsweise flüssigen Backmassen auf einem in einem Maschinengestell (2) umlaufenden, zumindest abschnittsweise beheizten Backflächenträger (3),
der zumindest eine endlose Backfläche (4) durch zumindest eine im Maschinengestell (2) stationär angeordnete, eine Heizvorrichtung (5) enthaltende, von einer Backmassenauftragsvorrichtung (6) bis zu einer Bandabnahmevorrichtung (7) reichende Backzone (8) transportiert,
wobei eine drehbar gelagerte und angetriebene nabenlose Trommel (9) als umlaufender beheizter Backflächenträger (3) vorgesehen ist,
**dadurch gekennzeichnet, dass**
eine um eine Lenkachse (10) schwenkbar angeordnete Nachlaufrolle (11) vorgesehen ist, die in einem Kontaktbereich (12) an einer Abrollfläche (13) der Trommel (9) abrollt, wobei zwischen dem Schnittpunkt (14) der Lenkachse (10) mit der Abrollfläche (13) und dem Kontaktbereich (12) ein Nachlaufabstand (16) vorgesehen ist.

2. Backvorrichtung nach Anspruch 1, **dadurch gekennzeichnet, dass** die Abrollfläche (13) eine Mantelfläche der Trommel (9) ist.

3. Backvorrichtung nach Anspruch 1 oder 2, **dadurch gekennzeichnet, dass** die Abrollfläche (13) eine innere Mantelfläche (20) der Trommel (9) ist.

4. Backvorrichtung nach einem der Ansprüche 1 bis 3, **dadurch gekennzeichnet,**
**dass** die Nachlaufrolle (11) drehbar um eine Radachse (17) an einem Nachlauflenker (18) gelagert ist und dass der Nachlauflenker (18) drehbar um die Lenkachse (10) am Maschinengestell gelagert ist.

5. Backvorrichtung nach Anspruch 4, **dadurch gekennzeichnet, dass**
die Lenkachse (10) im Wesentlichen orthogonal zur Radachse (17) verläuft.

6. Backvorrichtung nach einem der Ansprüche 1 bis 5, **dadurch gekennzeichnet,**
**dass** die Trommel (9) gegen die Schwerkraft an der Nachlaufrolle (11) abgestützt ist.

7. Backvorrichtung nach einem der Ansprüche 1 bis 6, **dadurch gekennzeichnet,**
**dass** die Trommel (9) hängend an einer Antriebsrolle (19) zum Drehantrieb der Trommel (9) angeordnet ist.

8. Backvorrichtung nach einem der Ansprüche 1 bis 7, **dadurch gekennzeichnet,**
**dass** die Trommel (9) hohlzylinderförmig ausgeführt ist und eine innere Mantelfläche (20) und eine äußere Mantelfläche (21) umfasst,
**dass** die Antriebsrolle (19) und die Nachlaufrolle (11) an der inneren Mantelfläche (20) abrollen und dass eine Backfläche (4) an der äußeren Mantelfläche (21) vorgesehen ist.

9. Backvorrichtung nach einem der Ansprüche 1 bis 8, **dadurch gekennzeichnet,**
**dass** bei Verschwenkung des Nachlauflenkers (18) aus der neutralen Position, insbesondere durch die Drehung der Trommel (9) ein Rückstellmoment Richtung neutrale Position erzeugt ist, wobei in der neutralen Position die Lenkachse (10) und der Schwerpunkt des momentanen Berührbereichs der Nachlaufrolle (11) mit der Abrollfläche (13) in einer Ebene liegen, wobei die Ebene eine Normalebene der Drehachse (27) der Trommel (9) ist.

10. Backvorrichtung nach einem der Ansprüche 1 bis 9, **dadurch gekennzeichnet,**
**dass** beidseitig der Trommel (9) jeweils zumindest eine Führungsrolle (22) vorgesehen ist.

11. Backvorrichtung nach Anspruche 10, **dadurch gekennzeichnet, dass** die Führungsrollen (22) die Trommel (9) an deren Stirnseiten (23) berühren oder im Bereich der Stirnseiten (23) angeordnet sind.

12. Backvorrichtung nach einem der Ansprüche 10 oder 11, **dadurch gekennzeichnet, dass** die Führungsrollen in einem Winkelbereich von 90° vor und/oder nach der Antriebsrolle (19) vorgesehen sind und bevorzugt im oberen Drittel der an der Antriebsrolle (19) hängenden Trommel (9) vorgesehen sind.

13. Backvorrichtung nach einem der Ansprüche 1 bis 12, **dadurch gekennzeichnet,**
**dass** die Antriebsrolle außerhalb des oberen Wendepunkts (24) an der Trommel (9) anliegt und bevorzugt in einem Winkelbereich von 1° bis 30° vor oder nach dem oberen Wendepunkt (24) der Trommel (9) vorgesehen ist.

14. Backvorrichtung nach einem der Ansprüche 1 bis 13, **dadurch gekennzeichnet,**
**dass** die Trommel (9) geometrisch eine erste Hälfte (25) und eine zweite Hälfte (26) umfasst, wobei die beiden Hälften (25, 26) durch eine vertikal verlaufende, die Drehachse (27) der Trommel (9) umfassende Ebene (28) voneinander getrennt sind und dass die Antriebsrolle (19) die Trommel (9) in der ersten Hälfte (25) und die Nachlaufrolle (11) die Trommel (9) in der zweiten Hälfte (26) außerhalb der Ebene (28) berühren.

## Claims

1. A baking apparatus for producing endless strips (1) of preferably liquid baking masses on a baking surface carrier (3), which circulates in a machine frame (2),
is heated at least in some sections and transports at least one endless baking surface (4) through at least one baking zone (8), which is arranged in a stationary manner in the machine frame (2), contains a heating device (5) and extends from a baking mass applying device (6) to a strip removal device (7),
a rotatably mounted and driven hub-free drum (9) being provided as the circulating heated baking surface carrier (3),
**characterised in that**
a trailing roller (11) is provided, which is arranged such that it can be pivoted about a steering axis (10) and rolls on a rolling surface (13) of the drum (9) in a contact region (12), wherein a trailing distance (16) is provided between the contact region (12) and the point (14) at which the steering axis (10) intersects with the rolling surface (13).

2. The baking apparatus according to claim 1,
**characterised in that** the rolling surface (13) is a lateral surface of the drum (9).

3. The baking apparatus according to claim 1 or 2,
**characterised in that** the rolling surface (13) is an inner lateral surface (20) of the drum (9).

4. The baking apparatus according to any one of claims 1 to 3, **characterised in that** the trailing roller (11) is mounted on a trailing control arm (18) such that said trailing roller can rotate about a wheel axis (17), and the trailing control arm (18) is mounted on the machine frame such that said trailing control arm can rotate about the steering axis (10).

5. The baking apparatus according to claim 4,
**characterised in that** the steering axis (10) runs substantially orthogonally to the wheel axis (17).

6. The baking apparatus according to any one of claims 1 to 5, **characterised in that** the drum (9) is supported against gravity on the trailing roller (11).

7. The baking apparatus according to any one of claims 1 to 6, **characterised in that** the drum (9) is suspended on a driving roller (19) to drive the drum (9) in a rotary manner.

8. The baking apparatus according to any one of claims 1 to 7, **characterised in that** the drum (9) is hollow-cylindrical and comprises an inner lateral surface (20) and an outer lateral surface (21), the driving roller (19) and the trailing roller (11) roll on the inner lateral surface (20), and a baking surface (4) is provided on the outer lateral surface (21).

9. The baking apparatus according to any one of claims 1 to 8, **characterised in that** when the trailing roller (18) is pivoted out of the neutral position, in particular by rotation of the drum (9), an aligning torque is generated in the direction of the neutral position, wherein in the neutral position the steering axis (10) and the centre of gravity of the region of the trailing roller (11) that is currently touching the rolling surface (13) lie in one plane, wherein the plane is a normal plane of the rotation axis (27) of the drum (9).

10. The baking apparatus according to any one of claims 1 to 9, **characterised in that** at least one guide roller (22) is provided on both sides of the drum (9).

11. The baking apparatus according to claim 10,
**characterised in that** the guide rollers (22) touch the drum (9) on the end faces (23) thereof or are arranged in the region of the end faces (23).

12. The baking apparatus according to either of claims 10 or 11, **characterised in that** the guide rollers are provided within an angle range of 90° in front of and/or behind the driving roller (19) and are preferably provided in the upper third of the drum (9) suspended on the driving roller (19).

13. The baking apparatus according to any one of claims 1 to 12, **characterised in that** the driving roller abuts against the drum (9) outside the upper turning point (24) and is preferably provided within an angle range of 1° to 30° in front of or behind the upper turning point (24) of the drum (9).

14. The baking apparatus according to any one of claims 1 to 13, **characterised in that** the drum (9) geometrically comprises a first half (25) and a second half (26), wherein the two halves (25, 26) are separated from each other by a vertical plane (28) comprising the rotation axis (27) of the drum (9), and the driving roller (19) touches the drum (9) in the first half (25) and the trailing roller (11) touches the drum (9) in the second half (26) outside the plane (28).

## Revendications

1. Dispositif de cuisson destiné à fabriquer des bandes sans fin (1) à partir d'une masse à cuire de préférence liquide sur un support à surface de cuisson (3) circulant dans un châssis de machine (2),
au moins chauffé par section qui transporte au moins une surface de cuisson (4) sans fin à travers au moins une zone de cuisson (8) disposée fixe dans le châssis de machine (2), contenant un dispositif de chauffage (5), depuis un dispositif d'application de la masse à cuire (6) jusqu'à un dispositif d'enlèvement de bande (7),
un tambour (9) sans moyeu entraîné et logé pouvant tourner étant prévu en tant que support de surface de cuisson (3) périphérique chauffée,
**caractérisé en ce**
**qu'**un galet suiveur (11) disposé pouvant pivoter autour d'un axe de direction (10) est prévu, qui roule dans une zone de contact (12) sur une surface de roulement (13) du tambour (9), une distance de suivi (16) étant prévue entre le point d'intersection (14) de l'axe de direction (10) avec la surface de roulement (13) et la zone de contact (12).

2. Dispositif de cuisson selon la revendication 1,
**caractérisé en ce que** la surface de roulement (13) est une surface d'enveloppe du tambour (9).

3. Dispositif de cuisson selon la revendication 1 ou 2, **caractérisé en ce que** la surface de roulement (13) est une surface d'enveloppe intérieure (20) du tambour (9).

4. Dispositif de cuisson selon l'une quelconque des revendications 1 à 3, **caractérisé en ce que** le galet suiveur (11) est logé pouvant tourner autour d'un axe de roue (17) sur un guide suiveur (18) et **en ce que** le guide suiveur (18) est logé pouvant tourner autour de l'axe de direction (10) sur le châssis de la machine.

5. Dispositif de cuisson selon la revendication 4, **caractérisé en ce que** l'axe de direction (10) passe pour l'essentiel de manière orthogonale par rapport à l'axe de roue (17).

6. Dispositif de cuisson selon l'une quelconque des revendications 1 à 5, **caractérisé en ce que** le tambour (9) est appuyé opposé à la force de gravité sur le galet suiveur (11).

7. Dispositif de cuisson selon l'une quelconque des revendications 1 à 6, **caractérisé en ce que** le tambour (9) est disposé suspendu sur un rouleau d'entraînement (19) pour un entraînement rotatif du tambour (9).

8. Dispositif de cuisson selon l'une quelconque des revendications 1 à 7, **caractérisé en ce que** le tambour (9) est exécuté en forme de cylindre creux et comprend une surface d'enveloppe intérieure (20) et une surface d'enveloppe extérieure (21), **en ce que** le rouleau d'entraînement (19) et le galet suiveur (11) roulent sur la surface d'enveloppe intérieure (20) et **en ce qu'**une surface de cuisson (4) est prévue sur la surface d'enveloppe extérieure (21).

9. Dispositif de cuisson selon l'une quelconque des revendications 1 à 8, **caractérisé en ce que** lors du pivotement du guide suiveur (18) de la position neutre, notamment par la rotation du tambour (9) il est produit un couple de rappel en direction de la position neutre, dans la position neutre l'axe de direction (10) et le centre de gravité de la zone de contact momentanée du galet suiveur (11) avec la surface de roulement (13) se trouvant dans un plan, le plan étant un plan normal de l'axe de rotation (27) du tambour (9).

10. Dispositif de cuisson selon l'une quelconque des revendications 1 à 9, **caractérisé en ce que** des deux côtés du tambour (9) est respectivement prévu au moins un galet de guidage (22).

11. Dispositif de cuisson selon la revendication 10,
**caractérisé en ce que** les galets de guidage (22) viennent en contact avec le tambour (9) sur leurs faces avant (23) ou sont disposés dans la zone des faces avant (23).

12. Dispositif de cuisson selon l'une quelconque des revendications 10 ou 11, **caractérisé en ce que** les galets de guidage sont prévus dans une plage angulaire de 90° avant et/ou après le rouleau d'entraînement (19) et sont prévus de préférence dans le tiers supérieur du tambour (9) suspendu sur le rouleau d'entraînement (19).

13. Dispositif de cuisson selon l'une quelconque des revendications 1 à 12, **caractérisé en ce que** le rouleau d'entraînement repose sur le tambour (9) en dehors du point tournant supérieur (24) et est prévu de préférence dans une plage angulaire de 1° à 30° avant ou après le point tournant supérieur (24) du tambour (9).

14. Dispositif de cuisson selon l'une quelconque des revendications 1 à 13, **caractérisé en ce que** le tambour (9) comprend géométriquement une première moitié (25) et une deuxième moitié (26), les deux moitiés (25, 26) étant séparées l'une de l'autre par un plan (28) passant verticalement, comprenant l'axe de rotation (27) du tambour (9) et **en ce que** le rouleau d'entraînement (19) vient en contact avec le tambour (9) dans la première moitié (25) et le galet suiveur (11) avec le tambour (9) dans la deuxième moitié (26) en dehors du plan (28).
